(19) Europäisches Patentamt
European Patent Office
Office européen des brevets

(11) **EP 4 297 228 A1**

(12) **EUROPÄISCHE PATENTANMELDUNG**

(43) Veröffentlichungstag:
**27.12.2023 Patentblatt 2023/52**

(21) Anmeldenummer: **22179914.1**

(22) Anmeldetag: **20.06.2022**

(51) Internationale Patentklassifikation (IPC):
*H02J 3/38* (2006.01)       *H02J 3/46* (2006.01)
*B60L 55/00* (2019.01)

(52) Gemeinsame Patentklassifikation (CPC):
**H02J 3/381; B60L 55/00; H02J 3/472**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Amthor, Arvid**
**98631 Grabfeld OT Nordheim (DE)**

• **Metzger, Michael**
**85570 Markt Schwaben (DE)**
• **Niessen, Stefan**
**91056 Erlangen (DE)**
• **Schreck, Sebastian**
**90439 Nürnberg (DE)**
• **Thiem, Sebastian**
**91413 Neustadt an der Aisch (DE)**

(74) Vertreter: **Siemens Patent Attorneys**
**Postfach 22 16 34**
**80506 München (DE)**

(54) **VERFAHREN UND VORRICHTUNG ZUR ERMITTLUNG EINER ABRUFREIHENFOLGE VON REGELLEISTUNGEN VON MEHREREN ANLAGEN ZUR BEREITSTELLUNG EINER GESAMTREGELLEISTUNG**

(57) Es wird ein Verfahren zur Ermittlung (12) einer Abrufreihenfolge von Regelleistungen $P_{k,t}^{\pm}$ von mehreren elektrischen Anlagen k (102), die an ein Stromnetz angeschlossen sind, mittels einer Aggregatoreinheit (105) vorgeschlagen, wobei für einen festgelegten Zeitbereich die Aggregatoreinheit (105) einen Zuschlag (200) für ein Bereitstellen einer geforderten Gesamtregelleistung $P_t^{\pm}$ für das Stromnetz erhalten hat. Das Verfahren ist gekennzeichnet durch die folgenden Schritte:
- Übermitteln (11, 201) von Registrierungsdaten an die Aggregatoreinheit (105) durch jede der Anlagen k (102), wobei die jeweiligen Registrierungsdaten wenigstens eine Verfügbarkeit $A_{k,t}$ der jeweiligen Anlage k (102) zur Bereitstellung einer verfügbaren Regelleistung $P_{k,t}^{\pm}$ sowie eine jeweilige minimale Leistung $P_{\min;k,t}^{\pm}$ kennzeichnen;
- Übermitteln (11, 202) einer aktuellen Leistung $P_{\mathrm{mea};k,t}^{\pm}$ an die Aggregatoreinheit (105) durch jede der Anlagen k (102); und
- Ermitteln (12) der Abrufreihenfolge der Anlagen k (102) durch die Aggregatoreinheit (105) unter der Nebenbedingung, dass die Summe der jeweiligen verfügbaren Regelleistungen $P_{k,t}^{\pm}$ gleich der geforderten Gesamtregelleistung $P_t^{\pm}$ ist, wobei jede der verfügbaren Regelleistungen $P_{k,t}^{\pm}$ durch eine Differenz der jeweiligen aktuellen Leistung $P_{\mathrm{mea};k,t}^{\pm}$ und der jeweiligen minimalen Leistung $P_{\min;k,t}^{\pm}$ festgelegt ist.
Weiterhin betrifft die Erfindung eine Aggregatoreinheit (105) zur Durchführung des Verfahrens.

# FIG

**Beschreibung**

Die Erfindung betrifft ein Verfahren gemäß dem Oberbegriff des Patentanspruches 1 sowie eine Vorrichtung gemäß dem Oberbegriff des Patentanspruches 12.

Für die Einhaltung der Systemstabilität (Netzfrequenz) innerhalb von Stromnetzen ist das ständige Gleichgewicht von verbrauchter und bereitgestellter Leistung sicherzustellen. Um auf Schwankungen der Erzeugung und des Verbrauchs in Echtzeit reagieren zu können, werden Regelleistungskapazitäten vorgehalten, die verschieden schnell abgerufen werden können, beispielsweise Primär-, Sekundär- und Tertiärregelung sowie Minutenreserveleistung. Bisher wird die Regelleistung vornehmlich von Großkraftwerken bereitgestellt, die entsprechend dynamisch ihre Leistung den Vorgaben entsprechend verändern können.

Durch einen zunehmenden Anteil volatiler, schwer vorhersagbarer Einspeisung erneuerbarer Energien, beispielsweise durch Photovoltaikanlagen und Windkraftanlagen, und dem Wegfall von konventionell betriebenen Großkraftwerken, beispielswiese Kernkraftwerke, Kohlekraftwerke und/oder Gaskraftwerke, erhöht sich der Bedarf an Regelleistung, die durch dezentrale Energieerzeuger beziehungsweise Verbraucher, insbesondere dezentrale Erzeuger, beispielsweise Wärmepumpen, Elektrofahrzeuge sowie Energiespeicher, zur Sicherstellung der Netzstabilität bereitgestellt werden muss.

Bei einer marktlichen Beschaffung von Regelleistung schreiben Übertragungsnetzbetreiber die erforderliche positive und negative Regelleistung (Primär, Sekundär, Tertiär) aus. Hierbei ist in Deutschland die Mindestgebotsgröße ein Megawatt. Somit ist eine Teilnahme von dezentralen Erzeugern/Verbrauchern an bekannten Regelleistungsmärkten nicht möglich, da diese typischerweise eine zu geringe Leistung aufweisen. Eine Teilnahme ist somit lediglich durch eine Aggregation durch einen Aggregator möglich.

Weiterhin sind für die Teilnahme am Regelleistungsmarkt strenge Präqualifikationsverfahren vorgeschrieben, insbesondere im Hinblick auf Abrufzeit, Reaktionszeit, Rampen und Sollwertsprung. Zum Zeitpunkt der Anforderung der Regelleistung durch den Netzbetreiber muss der Aggregator sicherstellen, dass die zugesicherte Leistung unter Einhaltung der technischen Anforderungen abrufbar ist. Der gesicherte Abruf von Flexibilität (Regelleistung) durch eine Vielzahl von Kleinanlagen (Leistung kleiner 1 MW) bedarf daher, verglichen mit dem Abruf von Regelleistung von wenigen Großkraftwerken, einer komplexeren Koordination.

Der vorliegenden Erfindung liegt die Aufgabe zugrunde, ein Verfahren und eine Vorrichtung zur Bereitstellung und Koordination von Regelleistung durch mehrere Kleinanlagen bereitzustellen.

Die Aufgabe wird durch ein Verfahren mit den Merkmalen des unabhängigen Patentanspruches 1 sowie durch eine Vorrichtung mit den Merkmalen des unabhängigen Patentanspruches 12 gelöst. In den abhängigen Patentansprüchen sind vorteilhafte Ausgestaltungen und Weiterbildungen der Erfindung angegeben.

Das erfindungsgemäße Verfahren zur Ermittlung einer Abrufreihenfolge von Regelleistungen $P_{k,t}^{\pm}$ von mehreren elektrischen Anlagen $k$, die an ein Stromnetz angeschlossen sind, mittels einer Aggregatoreinheit, wobei für einen festgelegten Zeitbereich die Aggregatoreinheit einen Zuschlag für ein Bereitstellen einer geforderten Gesamtregelleistung $P_t^{\pm}$ für das Stromnetz erhalten hat, ist gekennzeichnet durch die Schritte :

- Übermitteln von Registrierungsdaten an die Aggregatoreinheit durch jede der Anlagen $k$, wobei die jeweiligen Registrierungsdaten wenigstens eine Verfügbarkeit $A_{k,t}$ der jeweiligen Anlage $k$ zur Bereitstellung einer verfügbaren Regelleistung $P_{k,t}^{\pm}$ sowie eine jeweilige minimale Leistung $P_{\min;\,k,t}^{\pm}$ kennzeichnen;

- Übermitteln einer aktuellen Leistung $P_{\mathrm{mea};\,t}^{\pm}$ an die Aggregatoreinheit durch jede der Anlagen $k$; und
- Ermitteln der Abrufreihenfolge der Anlagen $k$ durch die Aggregatoreinheit unter der Nebenbedingung, dass die Summe der jeweiligen verfügbaren Regelleistungen $P_{k,t}^{\pm}$ gleich der geforderten Gesamtregelleistung $P_t^{\pm}$ ist, wobei jede der verfügbaren Regelleistungen $P_{k,t}^{\pm}$ durch eine Differenz der jeweiligen aktuellen Leistung $P_{\mathrm{mea};k,t}^{\pm}$ und der jeweiligen minimalen Leistung $P_{\min;k,t}^{\pm}$ festgelegt ist.

Grundsätzlich können die Leistungen eine Wirkleistung und/oder Blindleistung sein. Die Wirkleistung jeder Anlage ist bevorzugt kleiner oder gleich einem Megawatt (Kleinanlage) .

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Beispielsweise wird das Verfahren durch die Aggregatoreinheit, die als Rechenvorrichtung zur Durchführung des Verfahrens ausgebildet ist, durchgeführt.

Die Aggregatoreinheit kann eine Recheneinheit zur Ermittlung der Abrufreihenfolge umfassen. Weiterhin aggregiert die Aggregatoreinheit die einzelnen Regelleistungen der Anlagen zu einem gemeinsamen Regelleistungsangebot, welches an Regelleistungsmärkten gehandelt werden kann. Hierbei erhält die Aggregatoreinheit einen Zuschlag für eine geforderte Gesamtregelleistung, die auf vorangegangenen Angeboten der Aggregatoreinheit am Regelleistungsmarkt basiert.

Gegenstand der vorliegenden Erfindung ist die Abrufreihenfolge, die festlegt, wann welche Anlage zur Bereitstellung von Regelleistungen und somit zur erforderlichen Erbringung der Gesamtregelleistung beiträgt. Gemäß der vorliegenden Erfindung wird eine diesbezüglich verbesserte Abrufreihenfolge bereitgestellt.

In einem ersten Schritt des Verfahrens übermittelt jede der teilnehmenden Anlagen jeweilige Registrierungsdaten an die Aggregatoreinheit. Hierbei umfassen die Registrierungsdaten wenigstens eine Information über eine Verfügbarkeit $A_{k,t}$ der jeweiligen Anlage **k** zur Bereitstellung einer verfügbaren Regelleistung $P_{k,t}^{\pm}$ sowie eine jeweilige minimale Leistung $P_{\min;k,t}^{\pm}$. Dadurch ist der Aggregatoreinheit sinnbildlich bekannt, welche Anlage, zu welchen Zeiten grundsätzlich verfügbar ist, und welche Leistung (minimale Leistung) wenigstens minimal für den Betrieb der Anlage erforderlich ist. Hierbei sind die jeweiligen Leistungen und Größen grundsätzlich zeitabhängig und können beispielsweise als Zeitreihe innerhalb des festgelegten Zeitbereiches vorliegen. Die Registrierungsdaten umfassen somit Statusinformationen der jeweiligen Anlage. Hierbei kann die Verfügbarkeit eine grundsätzliche Verfügbarkeit $A_k$ mit Werten von Null und Eins sowie eine geplante Verfügbarkeit $A_{k,t}$ ebenfalls mit Werten von Null und Eins, umfassen.

In einem zweiten Schritt des Verfahrens wird eine aktuelle Leistung $P_{\mathrm{mea};k,t}^{\pm}$ an die Aggregatoreinheit durch jede der Anlagen **k** an die Aggregatoreinheit übermittelt. Mit anderen Worten ist dadurch die Aggregatoreinheit in Kenntnis darüber, welche aktuelle Leistung die jeweilige Anlage erzeugt beziehungsweise verbraucht, das heißt in das Stromnetz einspeist oder aus diesem ausspeist. Das ist deshalb erforderlich, da die Differenz zwischen aktueller Leistung und minimaler Leistung grundsätzlich als verfügbare Regelleistung verwendet werden kann. Die aktuelle Leistung wird als Messwert beziehungsweise in Form von Messdaten erfasst.

In einem dritten Schritt des Verfahrens wird die Abrufreihenfolge der Anlagen ermittelt. Hierbei erfolgt das Ermitteln der Abrufreihenfolge unter der Nebenbedingung, dass die Summe der verfügbaren Regelleistungen der einzelnen Anlagen die geforderte Gesamtregelleistung ergibt. Dadurch ist sichergestellt, dass die am Regelleistungsmarkt durch die Aggregatoreinheit beziehungsweise dem Aggregator zugesicherte Regelleistung (Gesamtregelleistung) geliefert, das heißt für das Stromnetz beziehungsweise den Stromnetzbetreiber bereitgestellt wird. Zudem wird durch die Nebenbedingung sichergestellt, dass nicht zu viel Regelleistung bereitgestellt wird, sondern lediglich so viel Flexibilität der Anlagen genutzt wird, wie zur Deckung des zugesicherten Regelleistungsbedarfs erforderlich ist. Hierbei wird die verfügbare Regelleistung jeder Anlage durch die Differenz der jeweiligen aktuellen Leistung und der jeweiligen minimalen Leistung, die für den Betrieb der Anlage erforderlich ist, ausgebildet. Mit anderen Worten werden Flexibilitäten der einzelnen Anlagen für die Bereitstellung der verfügbaren Regelleistung verwendet. Das Ermitteln der Abrufreihenfolge erfolgt daher unter technisch vorteilhaften Nebenbedingungen, nämlich, dass die geforderte Gesamtregelleistung durch die Anlage in Aggregation erbracht wird, und dass die aktuelle Flexibilität jeder Anlage hierzu verwendet wird. Hierbei kann das Ermitteln der Abrufreihenfolge durch ein mathematisches Optimierungsverfahren erfolgen, das auf einer festgelegten Zielfunktion basiert. Die genannten Nebenbedingungen werden dann als Randbedingungen beziehungsweise Nebenbedingungen der Optimierung verwendet. Die Optimierung erfolgt typischerweise numerisch, das heißt computergestützt.

Durch das vorliegende Verfahren können dezentrale Erzeuger/Verbraucher verbessert in einen Regelleistungsmarkt eingebunden werden. Weiterhin können die Anlagen, insbesondere Kleinanlagen mit einer Leistung kleiner oder gleich einem Megawatt, für die Bereitstellung von Regelleistung herangezogen werden. Somit können insbesondere elektrische Fahrzeuge, Ladestationen, Wärmepumpen und/oder Photovoltaikanlagen für die Regelleistungsbereitstellung über die Aggregatoreinheit verwendet werden. Für jeden Typ von Anlage kann eine spezifische Zielfunktion oder ein spezifischer Term innerhalb einer Gesamtzielfunktion bei der oben genannten Optimierung verwendet werden.

Weiterhin kann ein Netzbetreiber des Stromnetzes durch die gesammelten Daten feststellen, an welchen Knoten im Netz noch zusätzlich Flexibilität zugebaut werden könnte beziehungsweise zugebaut werden sollte.

Durch die vorliegende Erfindung können somit bisher ungenutzte Regelleistungskapazitäten innerhalb des Stromnetzes (Verteilnetz) erschlossen werden. Dadurch erfolgt ein Ausgleich von weggefallenen Regelleistungskapazitäten aus Großkraftwerken.

Die erfindungsgemäße Aggregatoreinheit zur Ermittlung einer Abrufreihenfolge von Regelleistungen $P_{k,t}^{\pm}$ von mehreren elektrischen Anlagen **k**, die an ein Stromnetz angebunden sind, wobei für einen festgelegten Zeitbereich die Aggregatoreinheit einen Zuschlag für ein Bereitstellen einer geforderten Gesamtregelleistung $P_t^{\pm}$ für das Stromnetz erhalten hat, ist dadurch gekennzeichnet, dass die Aggregatoreinheit dazu ausgebildet ist:

- Registrierungsdaten durch jede der Anlagen k zu empfangen und/oder anzufordern, wobei die jeweiligen Registrierungsdaten wenigstens eine Verfügbarkeit $A_{k,t}$ der jeweiligen Anlage **k** (102) zur Bereitstellung einer verfügbaren Regelleistung $P^{\pm}_{k,t}$ sowie eine jeweilige minimale Leistung $P^{\pm}_{\min;k,t}$ kennzeichnen;

- eine aktuelle Leistung $P^{\pm}_{\mathrm{mea};k,t}$ von jeder der Anlagen **k** zu empfangen und/oder anzufordern; und

- die Abrufreihenfolge der Anlagen **k** unter der Nebenbedingung, dass die Summe der jeweiligen verfügbaren Regelleistungen $P^{\pm}_{k,t}$ gleich der geforderten Gesamtregelleistung $P^{\pm}_{t}$ ist, zu ermitteln, wobei jede der verfügbaren Regelleistungen $P^{\pm}_{k,t}$ durch eine Differenz der jeweiligen aktuellen Leistung $P^{\pm}_{\mathrm{mea};k,t}$ und der jeweiligen minimalen Leistung $P^{\pm}_{\min;k,t}$ festgelegt ist.

Es ergeben sich zum erfindungsgemäßen Verfahren gleichwertige und gleichwirkende Vorteile und/oder Ausgestaltungen der erfindungsgemäßen Aggregatoreinheit.

Gemäß einer vorteilhaften Ausgestaltung der Erfindung ist $P^{\pm}_{k,t} = P^{\pm}_{\mathrm{mea};k,t} - P^{\pm}_{\min;\,k,t}$.

Mit anderen Worten wird die verfügbare Regelleistung einer der Anlagen **k** durch die Differenz zwischen der aktuellen Leistung (Messwert) und der für ihren Betrieb minimal erforderlichen Leistungen bestimmt. Dadurch ist vorteilhafterweise sichergestellt, dass die Anlage weiterbetrieben werden kann und dennoch Regelleistung (verfügbare Regelleistung) bereitgestellt werden kann. Die aktuelle Leistung $P^{\pm}_{\mathrm{mea};k,t}$ wird bevorzugt durch eine Messeinheit als Messwert erfasst.

In einer vorteilhaften Weiterbildung der Erfindung wird die Nebenbedingung durch $P^{\pm}_{t} = \sum_k P^{\pm}_{k,t} A_{k,t}\mu_{k,t}$ festgelegt, wobei $\mu_{k,t}$ zu ermittelnde Binärvariable sind, die jeweils festlegen, ob die Anlage **k** zum Zeitpunkt **t** für das Bereitstellen ihrer verfügbaren Regelleistung $P^{\pm}_{k,t}$ vorgesehen ist.

Die Binärvariablen $\mu_{k,t}$ werden bei der Ermittlung der Abrufreihenfolge bestimmt. Diese legen die Abrufreihenfolge im Wesentlichen fest. Mit anderen Worten ist $\mu_{k,t}$ jeweils eine binäre Entscheidungsvariable, die die Auswahl der Anlage **k** (Betriebsmittel) zur Vorhaltung des Lastabwurfs definiert. Die übermittelte grundsätzliche Verfügbarkeit und/oder die übermittelte aktuelle Verfügbarkeit der jeweiligen Anlagen werden über den Faktor $A_{k,t}$ berücksichtigt. Durch die Nebenbedingung ist somit sichergestellt, dass die Summe der einzelnen verfügbaren Regelleistungen die zugesagte beziehungsweise zugesicherte beziehungsweise geforderte Gesamtregelleistung ergeben.

Gemäß einer besonders vorteilhaften Ausgestaltung der Erfindung sind die Anlagen **k** als Ladestationen für elektrische Fahrzeuge, insbesondere elektrische Autos, ausgebildet.

Das erfindungsgemäße Verfahren ist besonders dazu geeignet, Ladestationen für elektrische Fahrzeuge in einen Regelleistungsmarkt einzubinden.

In einer vorteilhaften Weiterbildung der Erfindung umfassen die Registrierungsdaten einen aktuellen Ladezustand $\mathbf{SOC}_{k,t}$ eines elektrischen Fahrzeuges an der jeweiligen Ladestation **k.**

Dadurch kann vorteilhafterweise beim Ermitteln der Abrufreihenfolge der Ladezustand des jeweiligen Fahrzeuges berücksichtigt werden. Insbesondere kann dadurch verhindert werden, dass Elektrofahrzeuge mit einem niedrigen Ladezustand nicht oder nur wenig geladen werden oder der Ladezustand der Batterie nicht mehr für die geplante Fahrt ausreichend ist.

Gemäß einer vorteilhaften Ausgestaltung der Erfindung wird die Abrufreihenfolge mittels eines Optimierungsverfahrens ermittelt, wobei bei dem Optimierungsverfahren die Zielfunktion

$$Z = \sum_{k,t}(1 - \mathrm{SOC}_{k,t})A_{k,t}\mu_{k,t}$$ minimiert wird.

Ein Optimierungsverfahren ist eine mathematische Optimierung, bei welcher eine Zielfunktion minimiert oder maximiert wird. Durch das genannte Minimieren oder Maximieren, werden die Werte der Variablen in diesem Sinne, das heißt bezüglich der genannten Zielfunktion bestmöglich ermittelt. Vorliegend bilden $\mu_{k,t}$ die zu bestimmenden Variablen der Zielfunktion **Z** aus. Diese legen beziehungsweise bilden die Abrufreihenfolge aus, da durch diese festgelegt ist, wann welche Anlage zur Bereitstellung von Regelleistung verwendet wird. Die Zielfunktion modelliert hierbei den technisch vorteilhaften Zustand, dass Ladestationen, die eine längere Verfügbarkeit oder deren elektrisches Fahrzeug einen höheren Ladezustand aufweist, für die Bereitstellung der Regelleistung priorisiert werden, das heißt in der dadurch ermittelten Abrufreihenfolge weiter vorne stehen. Mit anderen Worten ist durch die genannte Zielfunktion sichergestellt, dass entsprechend die Ladestationen ermittelt werden (sinnbildlich gezogen), deren Ladezustand der an diese zum Laden angeschlossenen elektrischen Fahrzeuge die geringste Abweichung vom vollem Ladezustand (**SOC$_{k,t}$= 1**) aufweisen.

Alternativ oder ergänzend zur Ermittlung mittels des Optimierungsverfahren kann eine Tabelle (Look-Up-Table) verwendet werden. Beispielsweise wird Fahrzeugen mit einem niedrigem Ladezustand ein geringer Entscheidungswert EW1 zugewiesen. Analog erhalten Fahrzeuge, die lediglich über eine kleine maximal drosselbare Leistung verfügen, einen kleinen Entscheidungswert EW2. Ermittelt werden nun die Ladestationen, die sehr hohe Entscheidungswerte haben, wobei der Entscheidungswert beispielsweise durch EW1 x EW2 berechnet wird.

In einer vorteilhaften Weiterbildung der Erfindung wird die Zielfunktion durch einen Sicherheitssummanden erweitert.

Mit anderen Worten umfasst die Zielfunktion bevorzugt einen solchen Sicherheitssummanden. Dadurch ist vorteilhafterweise sichergestellt, dass, sollte in der Zeit zwischen der letzten Berechnung der Abrufreihenfolge und dem Senden des Abrufsignals des Netzbetreibers eine Anlage nicht mehr verfügbar sein, beispielsweise wenn ein Ladevorgang beendet wurde, eine weitere Anlage mit in den Regelleistungsabruf eingeschlossen wird.

Gemäß einer vorteilhaften Ausgestaltung der Erfindung wird die jeweilige verfügbare Regelleistung $P_{k,t}^{\pm}$ gemäß der ermittelten Abrufreihenfolge durch eine Netzregelungseinheit des Stromnetzes zur Regelung abgerufen.

Mit anderen Worten wird die gesamtheitlich verfügbare Regelleistung der Anlagen gemäß der ermittelten Abrufreihenfolge vorteilhafterweise durch den Netzbetreiber beziehungsweise eine Netzregelungseinheit des Stromnetzes zur Netzregelung abgerufen. Dadurch erbringen die Anlagen ihre verfügbare Regelleistung durch Einspeisung oder Ausspeisung zum gemäß der Abrufreihenfolge ermittelten Zeitpunkt.

Hierzu kann bevorzugt die Netzregelungseinheit ein entsprechendes Abrufsignal an die jeweiligen Anlagen **k** und/oder an jeweilige Steuereinheiten, die das Abrufsignal in Sollwerte für die jeweilige Anlage **k** wandeln, übermitteln.

Dadurch ist vorteilhafterweise sichergestellt, dass die grundsätzliche Regelung des Stromnetzes weiterhin durch die Netzregelungseinheit erfolgt. Das Abrufsignal der Netzregelungseinheit kann hierbei durch jeweilige Steuereinheiten (Edge Devices) in Sollwerte beziehungsweise Sollsignale für die jeweiligen Anlagen gewandelt werden.

In einer vorteilhaften Weiterbildung der Erfindung erfolgt der Zuschlag der Gesamtregelleistung durch einen Regelleistungsmarkt.

Mit anderen Worten ist die Aggregatoreinheit vorteilhafterweise in einen Regelleistungsmarkt eingebunden.

Gemäß einer vorteilhaften Ausgestaltung der Erfindung wird das Ermitteln der Abrufreihenfolge gemäß festgelegter Zeitbereiche wiederholt.

Mit anderen Worten wiederholt sich das Verfahren gemäß festgelegter Zeitbereiche, sodass beispielsweise für jeden Tag, für jede Stunde oder für jede 15 Minuten erneut eine Abrufreihenfolge ermittelt wird.

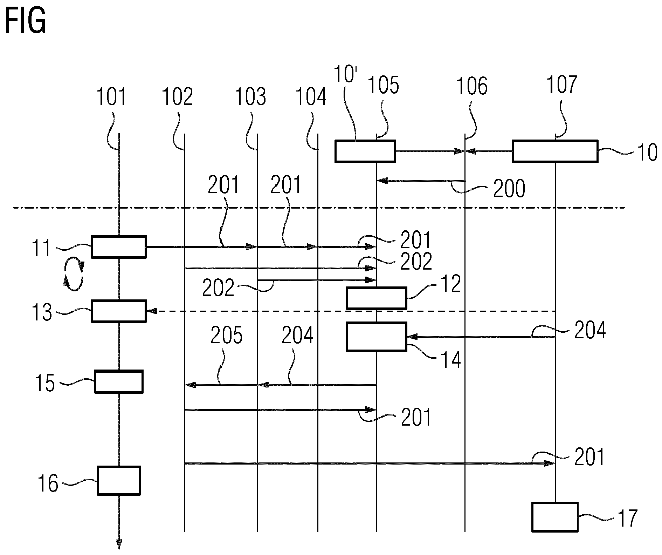

Weitere Vorteile, Merkmale und Einzelheiten der Erfindung ergeben sich aus den im Folgenden beschriebenen Ausführungsbeispielen sowie anhand der Zeichnung. Dabei zeigt die Figur einen schematisierten Ablauf eines Verfahrens gemäß einer Ausgestaltung der vorliegenden Erfindung.

Gleichartige, gleichwertige oder gleichwirkende Elemente können in der Figur mit denselben Bezugszeichen versehen sein.

Die Figur zeigt ein schematisiertes Verfahren gemäß einer Ausgestaltung der vorliegenden Erfindung. Hierbei ist in Richtung der Ordinate ein zeitlicher Verlauf des Verfahrens skizziert. An der Abszisse sind die jeweiligen eingebundenen Einheiten/Anlagen/Vorrichtungen aufgetragen.

Ein jeweiliges Ereignis und/oder Auslöser ist durch das Bezugszeichen 101 gekennzeichnet.

Die Figur zeigt Anlagen 102, die an ein gemeinsames Stromnetz angeschlossen sind. Die Anlagen 102 können Energie in das Stromnetz einspeisen und/oder ausspeisen. Insbesondere sind die Anlagen 102 als Ladestationen für elektrische Fahrzeuge ausgebildet.

Weiterhin zeigt die Figur Steuereinheiten 103 (Edge Devices) der jeweiligen Anlagen 102. Die Steuereinheiten 103 sind zur Steuerung ihrer zugehörigen Anlage 102 ausgebildet. Eine jeweilige Agenteneinheit 104 kann die Anbindung der jeweiligen Anlage 102 an eine Aggregatoreinheit 105 ausgestalten. Hierbei übermittelt die jeweilige Agenteneinheit 104 Registrierungsdaten, beispielsweise Statusinformationen der Anlagen an die Aggregatoreinheit 105.

Weiterhin zeigt die Figur einen Regelleistungsmarkt 105 sowie eine Netzregelungseinheit 107 eines Netzbetreibers des Stromnetzes.

Das dargestellte Gesamtverfahren ist durch die gestrichelte Linie in eine Handelsphase und eine Echtzeitphase eingeteilt. Gegenstand der vorliegenden Erfindung ist die Echtzeitphase, das heißt die technische Realisierung der in der Handelsphase ausgehandelten Verträge zur Bereitstellung von Regelleistung am Regelleistungsmarkt 106.

In der Handelsphase schreibt der Netzbetreiber eine bestimmte Regelleistungsmenge aus (Bezugszeichen 10). Die Aggregationseinheit 105 gibt ein bestimmtes Gebot an den Regelleistungsmarkt 106 ab (Bezugszeichen 10'). Der Regelleistungsmarkt ermittelt basierend hierauf ein Marktergebnis, welches an die Aggregationseinheit 105 übermittelt wird. Dieser Zuschlag einer von der Aggregationseinheit 105 geforderten Gesamtregelleistung ist durch das Bezugszeichen 200 gekennzeichnet. Durch die Handelsphase, die vorab der Echtzeitphase erfolgt, ist somit die von der Aggregationseinheit 105 geforderte Regelleistung festgelegt.

In der Echtzeitphase ist die geforderte Gesamtregelleistung durch die Aggregationseinheit 105 zu erbringen. Hierfür bedient sich die Aggregationseinheit 105 der Anlagen 102, die schließlich in Summe die Gesamtregelleistung für die Aggregationseinheit 105 erbringen. Welche der Anlagen 102 welche Regelleistung zu welchem Zeitpunkt erbringt ist durch eine Abrufreihenfolge festgelegt. Die Abrufreihenfolge wird hierbei erfindungsgemäß durch die Aggregationseinheit 105 ermittelt.

Zur Ermittlung der Abrufreihenfolge werden in einem ersten Schritt Registrierungsdaten sowie Messdaten von den Anlagen 102 an die Aggregationseinheit 105 übermittelt. Die Übermittlung der Registrierungsdaten ist durch das Bezugszeichen 201 gekennzeichnet.

Die Übermittlung der Messdaten, insbesondere der aktuellen Leistung der Anlagen 102, erfolgt gemäß einem zweiten Schritt und ist durch das Bezugszeichen 202 gekennzeichnet.

In einem dritten Schritt ermittelt beziehungsweise berechnet die Aggregationseinheit 105 die Abrufreihenfolge gemäß der vorliegenden Erfindung und/oder einer ihrer Ausgestaltungen (Bezugszeichen 12). Dadurch ist festgelegt, welche der Anlagen 102 welche Leistung zu welchem Zeitpunkt für das Bereitstellen der geforderten Gesamtregelleistung bereitstellt.

Der eigentliche Abruf der bereitstellbaren Gesamtregelleistung gemäß der ermittelten Abrufreihenfolge erfolgt durch ein Abrufsignal der Netzregelungseinheit 107, welches diese an die Aggregationseinheit 105 übermittelt. Das Abrufsignal ist durch das Bezugszeichen 204 und das Abrufen der Regelleistung durch das Bezugszeichen 14 gekennzeichnet.

Basierend auf dem Abrufsignal 204 übermittelt die Aggregationseinheit 105 ein entsprechendes Abrufsignal 204 an die jeweiligen Steuereinheiten 103. Die Steuereinheiten 103 wandeln das jeweilige Abrufsignal 104 in Sollwerte für die Regelung/Steuerung der jeweiligen Anlagen 102 um. Die Sollwerte werden an die Anlagen 102 übermittelt (Bezugszeichen 205). Basierend auf den genannten übermittelten Sollwerten erfolgt dann die tatsächliche Leistungserbringung gemäß der ermittelten Abrufreihenfolge. Die Leistungserbringung ist durch das Bezugszeichen 15 gekennzeichnet.

Während oder nach der Leistungserbringung 15 übermitteln die Anlagen 102 Messdaten bezüglich ihrer Leistung an die Aggregatoreinheit 105 sowie an die Netzregelungseinheit 107. Dies ist wiederum mit dem Bezugszeichen 201 gekennzeichnet. Basierend auf den an die Netzregelungseinheit 107 übermittelten Messdaten, beziehungsweise Leistungsdaten, kann diese eine Validierung 17 durchführen. Damit wird vorteilhafterweise sichergestellt, dass die geforderte Gesamtregelleistung erbracht wurde und zudem kann festgestellt werden, welche der Anlagen 102 welchen tatsächlichen Beitrag geliefert hat.

Das genannte Verfahren kann sich, durch den kreisförmigen Pfeil angedeutet, zyklisch mit einer festgelegten Abtastrate und/oder ereignisbasiert, beispielsweise durch ein Ankommen eines Elektrofahrzeuges an einer der Ladestation 102, wiederholen.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

| 10 | Ausschreibung Regelleistungsbedarf |
| 10' | Gebotsabgabe |
| 11 | Registrierung |
| 12 | Ermittlung der Abrufreihenfolge |
| 13 | Aktivierung der Regelleistung |
| 14 | Abruf der Regelleistung |
| 15 | Leistungserbringung |
| 16 | Ende der Leistungserbringung |
| 17 | Validierung |
| 101 | Ereignis/Auslöser |
| 102 | Anlage |
| 103 | Steuereinheit |
| 104 | Agenteneinheit |
| 105 | Aggregatoreinheit |
| 106 | Regelleistungsmarkt |
| 107 | Netzregelungseinheit |
| 200 | Zuschlag |
| 201 | Übermitteln der Registrierungsdaten |
| 202 | Übermitteln von Messdaten |
| 204 | Abrufsignal |
| 205 | Übermitteln von Sollwerten |

Patentansprüche

1. Verfahren zur Ermittlung (12) einer Abrufreihenfolge von Regelleistungen $P_{k,t}^{\pm}$ von mehreren elektrischen Anlagen $k$ (102), die an ein Stromnetz angeschlossen sind, mittels einer Aggregatoreinheit (105), wobei für einen festgelegten Zeitbereich die Aggregatoreinheit (105) einen Zuschlag (200) für ein Bereitstellen einer geforderten Gesamtregelleistung $P_t^{\pm}$ für das Stromnetz erhalten hat, **gekennzeichnet durch** die Schritte:

- Übermitteln (11, 201) von Registrierungsdaten an die Aggregatoreinheit (105) durch jede der Anlagen $k$ (102), wobei die jeweiligen Registrierungsdaten wenigstens eine Verfügbarkeit $A_{k,t}$ der jeweiligen Anlage $k$ (102) zur Bereitstellung einer verfügbaren Regelleistung $P_{k,t}^{\pm}$ sowie eine jeweilige minimale Leistung $P_{\min;k,t}^{\pm}$ kennzeichnen;

- Übermitteln (11, 202) einer aktuellen Leistung $P^{\pm}_{\mathrm{mea};k,t}$ an die Aggregatoreinheit (105) durch jede der Anlagen **k** (102); und

- Ermitteln (12) der Abrufreihenfolge der Anlagen **k** (102) durch die Aggregatoreinheit (105) unter der Nebenbedingung, dass die Summe der jeweiligen verfügbaren Regelleistungen $P^{\pm}_{k,t}$ gleich der geforderten Gesamtregelleistung $P^{\pm}_{t}$ ist, wobei jede der verfügbaren Regelleistungen $P^{\pm}_{k,t}$ durch eine Differenz der jeweiligen aktuellen Leistung $P^{\pm}_{\mathrm{mea};k,t}$ und der jeweiligen minimalen Leistung $P^{\pm}_{\mathrm{min};k,t}$ festgelegt ist.

2. Verfahren gemäß Anspruch 1, **gekennzeichnet dadurch, dass** $P^{\pm}_{k,t} = P^{\pm}_{\mathrm{mea};k,t} - P^{\pm}_{\mathrm{min};k,t}$ ist.

3. Verfahren gemäß Anspruch 1 oder 2, **gekennzeichnet dadurch, dass** die Nebenbedingung durch $P^{\pm}_{t} = \sum_{k} P^{\pm}_{k,t} A_{k,t} \mu_{k,t}$ festgelegt wird, wobei $\mu_{k,t}$ zu ermittelnde Binärvariablen sind, die jeweils festlegen, ob die Anlage **k** (102) zum Zeitpunkt **t** für das Bereitstellen ihrer verfügbaren Regelleistung $P^{\pm}_{k,t}$ vorgesehen ist.

4. Verfahren gemäß einem der vorhergehenden Ansprüche, **gekennzeichnet dadurch, dass** die Anlagen **k** (102) als Ladestationen für elektrische Fahrzeuge ausgebildet sind.

5. Verfahren gemäß Anspruch 4, **gekennzeichnet dadurch, dass** die Registrierungsdaten einen aktuellen Ladezustand $SOC_{k,t}$ eines elektrischen Fahrzeuges an der jeweiligen Ladestation **k** umfassen.

6. Verfahren gemäß Anspruch 5, **gekennzeichnet dadurch, dass** die Abrufreihenfolge mittels eines Optimierungsverfahrens ermittelt wird, wobei bei dem Optimierungsverfahren die Zielfunktion

$$Z = \sum_{k,t}(1 - SOC_{k,t}) A_{k,t} \mu_{k,t}$$

minimiert wird.

7. Verfahren gemäß Anspruch 6, **gekennzeichnet dadurch, dass** die Zielfunktion durch einen Sicherheitssummanden erweitert wird.

8. Verfahren gemäß einem der vorhergehenden Ansprüche, **gekennzeichnet dadurch, dass** die jeweilige verfügbare Regelleistung $P^{\pm}_{k,t}$ gemäß der ermittelten Abrufreihenfolge durch eine Netzregelungseinheit (107) des Stromnetzes zur Regelung abgerufen wird (14, 204, 205).

9. Verfahren gemäß Anspruch 8, **gekennzeichnet dadurch, dass** die Netzregelungseinheit (107) ein entsprechendes Abrufsignal (204) an die jeweiligen Anlagen **k** (102) und/oder an jeweilige Steuereinheiten (103), die das Abrufsignal (204) in Sollwerte (205) für die jeweilige Anlage **k** (102) wandeln, übermittelt.

10. Verfahren gemäß einem der vorhergehenden Ansprüche, **gekennzeichnet dadurch, dass** der Zuschlag (200) der Gesamtregelleistung durch einen Regelleistungsmarkt (106) erfolgt.

11. Verfahren gemäß einem der vorhergehenden Ansprüche, **gekennzeichnet dadurch, dass** das Ermitteln (12) der Abrufreihenfolge gemäß festgelegter Zeitbereiche wiederholt wird.

12. Aggregatoreinheit (105) zur Ermittlung (12) einer Abrufreihenfolge von Regelleistungen $P^{\pm}_{k,t}$ von mehreren elektrischen Anlagen **k** (102), die an ein Stromnetz angebunden sind, wobei für einen festgelegten Zeitbereich die Aggregatoreinheit (105) einen Zuschlag (200) für ein Bereitstellen einer geforderten Gesamtregelleistung $P^{\pm}_{t}$ für das Stromnetz erhalten hat, **dadurch gekennzeichnet, dass** die Aggregatoreinheit (105) dazu ausgebildet ist:

- Registrierungsdaten durch jede der Anlagen **k** (102) zu empfangen und/oder anzufordern (11, 201), wobei die jeweiligen Registrierungsdaten wenigstens eine Verfügbarkeit $A_{k,t}$ der jeweiligen Anlage **k** (102) zur Bereitstellung einer verfügbaren Regelleistung $P^{\pm}_{k,t}$ sowie eine jeweilige minimale Leistung $P^{\pm}_{\mathrm{min};k,t}$ kennzeichnen;

- eine aktuelle Leistung $P^{\pm}_{\mathrm{mea};k,t}$ von jeder der Anlagen **k** (102) zu empfangen und/oder anzufordern; und

- die Abrufreihenfolge der Anlagen **k** unter der Nebenbedingung, dass die Summe der jeweili-

gen verfügbaren Regelleistungen $P^{\pm}_{k,t}$ gleich der geforderten Gesamtregelleistung $P^{\pm}_t$ ist, zu ermitteln (12), wobei jede der verfügbaren Regelleistungen $P^{\pm}_{k,t}$ durch eine Differenz der jeweiligen aktuellen Leistung $P^{\pm}_{\mathrm{mea};k,t}$ und der jeweiligen minimalen Leistung $P^{\pm}_{\mathrm{min};k,t}$ festgelegt ist.

FIG

Europäisches
Patentamt

European
Patent Office

Office européen
des brevets

**EUROPÄISCHER RECHERCHENBERICHT**

**Nummer der Anmeldung**

**EP 22 17 9914**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/040295 A1 (KAPLAN DAVID L [US] ET AL) 14. Februar 2008 (2008-02-14)<br>* Zusammenfassung *<br>* Absätze [0043] – [0047], [0081], [0095] – [0101], [0113], [0135], [0136]; Abbildungen 1-7 *<br>----- | 1-12 | INV.<br>H02J3/38<br>H02J3/46<br>B60L55/00 |
| A | WILLETT KEMPTON ET AL: "Vehicle-to-Grid Power: Battery, Hybrid, and Fuel Cell Vehicles as Resources for Distributed Electric Power in California", UCD-ITS-RR-01-03,, 1. Juni 2001 (2001-06-01), Seiten 1-78, XP008135094,<br>* Zusammenfassung *<br>* Seiten 10,14-16 *<br>----- | 1-12 | |
| A | US 2011/202192 A1 (KEMPTON WILLETT [US]) 18. August 2011 (2011-08-18)<br>* Zusammenfassung *<br>* Absätze [0092], [0123], [0143]; Abbildungen 16,7 *<br>----- | 1-12 | |

**RECHERCHIERTE SACHGEBIETE (IPC)**

H02J
B60L

Der vorliegende Recherchenbericht wurde für alle Patentansprüche erstellt

| Recherchenort | Abschlußdatum der Recherche | Prüfer |
|---|---|---|
| **München** | **8. Dezember 2022** | **Jäschke, Holger** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 17 9914

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-12-2022

| Im Recherchenbericht angeführtes Patentdokument | Datum der Veröffentlichung | Mitglied(er) der Patentfamilie | Datum der Veröffentlichung |
|---|---|---|---|
| US 2008040295 A1 | 14-02-2008 | KEINE | |
| US 2011202192 A1 | 18-08-2011 | CN 102792547 A | 21-11-2012 |
| | | CN 102844957 A | 26-12-2012 |
| | | CN 102859827 A | 02-01-2013 |
| | | DK 2537224 T3 | 21-09-2020 |
| | | DK 3826134 T3 | 24-10-2022 |
| | | EP 2537224 A1 | 26-12-2012 |
| | | EP 2537225 A1 | 26-12-2012 |
| | | EP 2537226 A1 | 26-12-2012 |
| | | EP 3826134 A1 | 26-05-2021 |
| | | EP 4033632 A1 | 27-07-2022 |
| | | EP 4106138 A1 | 21-12-2022 |
| | | ES 2825709 T3 | 17-05-2021 |
| | | ES 2928192 T3 | 16-11-2022 |
| | | FI 3826134 T3 | 31-10-2022 |
| | | JP 5905836 B2 | 20-04-2016 |
| | | JP 6034198 B2 | 30-11-2016 |
| | | JP 2013520942 A | 06-06-2013 |
| | | JP 2013520943 A | 06-06-2013 |
| | | JP 2013523058 A | 13-06-2013 |
| | | KR 20120135509 A | 14-12-2012 |
| | | KR 20130006453 A | 16-01-2013 |
| | | KR 20130028068 A | 18-03-2013 |
| | | PL 2537224 T3 | 19-07-2021 |
| | | PL 2537226 T3 | 31-10-2022 |
| | | PT 2537224 T | 20-10-2020 |
| | | PT 2537226 T | 29-03-2022 |
| | | PT 3826134 T | 04-10-2022 |
| | | US 2011202192 A1 | 18-08-2011 |
| | | US 2011202217 A1 | 18-08-2011 |
| | | US 2011202418 A1 | 18-08-2011 |
| | | WO 2011102855 A1 | 25-08-2011 |
| | | WO 2011102856 A1 | 25-08-2011 |
| | | WO 2011102857 A1 | 25-08-2011 |

EPO FORM P0461

Für nähere Einzelheiten zu diesem Anhang : siehe Amtsblatt des Europäischen Patentamts, Nr.12/82